# EUROPÄISCHE PATENTSCHRIFT

(11) **EP 3 559 607 B1**
(45) Veröffentlichungstag und Bekanntmachung des Hinweises auf die Patenterteilung: **21.06.2023**
(21) Anmeldenummer: 17803927.7
(22) Anmeldetag: 22.11.2017
(51) Int. Cl.: G01F 1/84, G01N 9/00

(54) **MESSAUFNEHMER VOM VIBRATIONSTYP ZUM MESSEN DER DICHTE UND/ODER DES MASSEDURCHFLUSSES EINES STRÖMENDEN MEDIUMS**
VIBRATORY TYPE METER FOR MEASURING THE DENSITY AND/OR FLOW RATE OF A FLOWING MEDIUM
SYSTÈME DE MESURE DU TYPE VIBRANT POUR MESURER LA DENSITÉ ET/OU LE DÉBIT D'UN MILIEU EN ÉCOULEMENT

(30) Priorität: 23.12.2016 DE 102016125616
(43) Veröffentlichungstag der Anmeldung: 30.10.2019
(73) Patentinhaber: Endress+Hauser Flowtec AG, 4153 Reinach (CH)
(72) Erfinder: ZHU, Hao, 85354 Freising (DE); RIEDER, Alfred, 84032 Landshut (DE); BITTO, Ennio, 4147 Aesch (CH); ECKERT, Gerhard, 79639 Grenzach-Wyhlen (DE)
(74) Vertreter: Hahn, Christian
(86) Internationale Anmeldenummer: PCT/EP2017/080084
(87) Internationale Veröffentlichungsnummer: WO 2018/114198

(56) Entgegenhaltungen:
- DE-A1-102014 118 367
- DE-A1-102015 104 931
- US-A1- 2006 016 273
- US-A1- 2012 167 697
- US-A1- 2012 279 317
- US-A1- 2015 033 874

## Beschreibung

Die vorliegende Erfindung betrifft einen Messaufnehmer vom Vibrationstyp zum Messen der Dichte und/oder des Massedurchflusses eines Mediums, insbesondere einen solchen Messaufnehmer mit vier gleichsinnig gebogenen Messrohren. Ein solcher Messaufnehmer ist beispielsweise in der Offenlegungsschrift DE 10 2011 010 178 A1 offenbart. Die Messrohre sind paarweise zu Oszillatoren gekoppelt, wobei jeweils zwei übereinander liegende Messrohre einen Oszillator bilden. Die Kopplung über den geringen Abstand erscheint jedoch sehr starr, so dass große Zwangskräfte und mechanische Spannungen zwischen den gekoppelten Messrohren zu erwarten sind, welche absehbar die Messgenauigkeit und Empfindlichkeit des Messaufnehmers beeinträchtigen. Ähnliche Messaufnehmer ist in den Veröffentlichungen US 2006/016 273 A1 und DE 10 2014 118 367 A1 beschrieben. Die Veröffentlichungen US 2012/167 697 A1 und US 2012/279 317 A1 offenbaren Messaufnehmer mit vier bzw. acht identischen Messrohren die in zwei bzw. vier paarweise einander gegenüberliegenden Messrohrpaaren angeordnet sind. Dies führt zu einem recht sperrigen Gerät, da identische Messrohre kaum in gleichsinniger Bogenorientierung anzuordnen sind. Die Veröffentlichung DE 10 2015 104 104 931 A1 offenbart einen gattungsgemäßen Messaufnehmer mit zwei Paaren von Messrohren die paarweise identisch und gleichsinnig gebogen sind. Die Messrohre schwingen paarweise gegeneinander auf ihren jeweiligen Eigenfrequenzen, die sich für gleiche Schwingungsmoden zwischen den Messrohrpaaren unterscheiden. Dies erfordert eine aufwändige Mess- und Betriebsschaltung, um die Signale der beiden, weitgehend unabhängigen Messrohrpaare auszuwerten.

Es ist daher die Aufgabe der Erfindung, hier Abhilfe zu schaffen.

Die Aufgabe wird gelöst durch den Messaufnehmer gemäß dem unabhängigen Patentanspruch 1.

Die Erfindung offenbart einen Messaufnehmer vom Vibrationstyp zum Messen der Dichte und/oder des Massedurchflusses eines Mediums, mit:
einem ersten Oszillator; einem zweiten Oszillator; und mindestens einem Erreger, und mindestens zwei Schwingungssensoren, wobei der erste Oszillator umfasst:
ein erstes Messrohr, welches eine erste Messrohrmittenlinie aufweist, die spiegelsymmetrisch zu einer Messrohrquerebene verläuft, wobei das erste Messrohr dazu eingerichtet ist, in einem ersten, bezüglich der ersten Messrohrquerebene spiegelsymmetrischen Biegeschwingungsmode zu schwingen,
wobei das erste Messrohr in seiner Ruhelage gebogen ist,
wobei eine erste Messrohrlängsebene gegeben ist, in welcher das Integral über die Abstandsquadrate zwischen der ersten Messrohrmittenlinie, und der ersten Messrohrlängsebene, minimal ist,
wobei das erste Messrohr, im ersten Biegeschwingungsmode im Wesentlichen senkrecht zur ersten Messrohrlängsebene, schwingt,
ein zweites Messrohr, welches eine zweite Messrohrmittenlinie aufweist, die spiegelsymmetrisch zu der Messrohrquerebene verläuft, wobei das zweite Messrohr dazu eingerichtet ist, in dem ersten, bezüglich der ersten Messrohrquerebene spiegelsymmetrischen Biegeschwingungsmode zu schwingen,
mindestens einen ersten elastischen Schwingungskoppler, welcher das erste Messrohr und das zweite Messrohr miteinander zu dem ersten Oszillator koppelt; und
wobei das zweite Messrohr in seiner Ruhelage gebogen ist,
wobei eine zweite Messrohrlängsebene gegeben ist, in welcher das Integral über die Abstandsquadrate zwischen der zweiten Messrohrmittenlinie und der zweiten Messrohrlängsebene minimal ist,
wobei das zweite Messrohr im ersten Biegeschwingungsmode im Wesentlichen senkrecht zur zweiten Messrohrlängsebene schwingt,
wobei das erste Messrohr und das zweite Messrohr in der Ruhelage die gleiche Richtung gebogen sind,
wobei der zweite Oszillator umfasst:
   ein drittes Messrohr, welches eine dritte Messrohrmittenlinie aufweist, die spiegelsymmetrisch zu der Messrohrquerebene verläuft, wobei das dritte Messrohr dazu eingerichtet ist, in einem ersten, bezüglich der Messrohrquerebene spiegelsymmetrischen Biegeschwingungsmode zu schwingen;
   ein viertes Messrohr, welches eine vierte Messrohrmittenlinie aufweist, die spiegelsymmetrisch zu der Messrohrquerebene verläuft, wobei das vierte Messrohr dazu eingerichtet ist, in dem ersten, bezüglich der Messrohrquerebene spiegelsymmetrischen Biegeschwingungsmode zu schwingen; und
   mindestens einen zweiten elastischen Schwingungskoppler welcher das dritte Messrohr und das vierte Messrohr dem zweiten Oszillator koppelt,
   wobei das dritte Messrohr in seiner Ruhelage gebogen ist,
   wobei eine dritte Messrohrlängsebene gegeben ist, in welcher das Integral über die Abstandsquadrate zwischen der dritten Messrohrmittenlinie und der dritten Messrohrlängsebene minimal ist,
   wobei das dritte Messrohr im ersten Biegeschwingungsmode im Wesentlichen senkrecht zur dritten Messrohrlängsebene schwingt,
   wobei das vierte Messrohr in seiner Ruhelage gebogen ist, wobei eine vierte Messrohrlängsebene gegeben ist, in welcher das Integral über die Abstandsquadrate zwischen der vierten Messrohrmittenlinie und der vierten Messrohrlängsebene minimal ist, wobei das vierte Messrohr im ersten Biegeschwingungsmode im Wesentlichen senkrecht zur vierten Messrohrlängsebene schwingt,
   wobei das dritte Messrohr und das vierte Messrohr in ihrer Ruhelage in die gleiche Richtung gebogen sind,
   wobei der Messaufnehmer eine Messaufnehmerlängsebene aufweist, die senkrecht zur Messrohrquerebene verläuft,
   wobei die erste Messrohrmittenlinie bezüglich der Messaufnehmerlängsebene spiegelsymmetrisch zur dritten Messrohrmittenlinie verläuft,
   wobei die zweite Messrohrmittenlinie bezüglich der Messaufnehmerlängsebene spiegelsymmetrisch zur vierten Messrohrmittenlinie verläuft,
   wobei die Messaufnehmerlängsebene zwischen dem ersten Messrohr und dem zweiten Messrohr verläuft, wobei die Messaufnehmerlängsebene zwischen dem dritten Messrohr und dem vierten Messrohr verläuft,
   wobei der Erreger dazu eingerichtet ist, Oszillatorschwingungen der beiden Oszillatoren gegeneinander anzuregen.

In einer Weiterbildung der Erfindung weist der erste Schwingungskoppler eine erste effektive Federkonstante auf, wobei der zweite Schwingungskoppler eine zweite effektive Federkonstante aufweist, wobei die zweite Federkonstante um nicht mehr als 6% insbesondere nicht mehr als 3% und bevorzugt nicht mehr als 1% von der ersten Federkonstanten abweicht.

In einer Weiterbildung der Erfindung weist der Messaufnehmer eine erste Eigenfrequenz auf, für einen Schwingungsmode, bei dem die beiden Messrohre des ersten Oszillators näherungsweise in dem ersten Biegeschwingungsmode miteinander in Phase schwingen, und bei dem die beiden Messrohre des zweiten Oszillators näherungsweise in dem ersten Biegeschwingungsmode miteinander in Phase schwingen,
wobei der Messaufnehmer eine zweite Eigenfrequenz aufweist für einen Schwingungsmode, bei dem die beiden Messrohre des ersten Oszillators näherungsweise gegenphasig schwingen, und bei dem die beiden Messrohre des zweiten Oszillators näherungsweise in dem ersten Biegeschwingungsmode gegenphasig schwingen,
wobei die zweite Eigenfrequenz größer ist als die erste Eigenfrequenz.

In einer Weiterbildung der Erfindung ist die zweite Eigenfrequenz um mindestens 4%, insbesondere mindestens 8%, vorzugsweise mindestens 16% der ersten Eigenfrequenz größer als die erste Eigenfrequenz.

In einer Weiterbildung der Erfindung weisen das erste Messrohr und das dritte Messrohr ohne die elastischen Schwingungskoppler für den ersten Biegeschwingungsmode eine erste effektive Messrohreigenfrequenz auf, wenn sie gegeneinander schwingen, wobei das zweite Messrohr und das vierte Messrohr ohne die elastischen Schwingungskoppler für den ersten Biegeschwingungsmode eine zweite effektive Messrohreigenfrequenz aufweisen, wenn sie gegeneinander schwingen, wobei die beiden mittleren Messrohreigenfrequenzen um nicht mehr als 8 % insbesondere nicht mehr als 4 % und bevorzugt nicht mehr als 2 % und besonders bevorzugt nicht mehr als 1 % von, ihrem arithmetischen Mittelwert abweichen.

In einer Weiterbildung der Erfindung sind die Messrohrlängsebenen um nicht mehr als 8°, insbesondere nicht mehr als 4°, vorzugsweise nicht mehr als 2° und besonders bevorzugt nicht mehr als 1 ° gegenüber der Messaufnehmerlängsebene geneigt.

In einer Weiterbildung der Erfindung ist bzw. sind mindestens einer, vorzugsweise beide, der elastischen Schwingungskoppler mit den jeweils durch ihn bzw. sie gekoppelten Messrohren an Befestigungspunkten verbunden, welche symmetrisch zur Messrohrquerebene angeordnet sind.

In einer Weiterbildung der Erfindung umfasst der Messaufnehmer weiterhin einlaufseitig und auslaufseitig jeweils einen Sammler, wobei die Messrohre jeweils einlaufseitig und auslaufseitig mit einem Sammler strömungstechnisch zusammengefasst sind, wobei die Sammler insbesondere derart ausgestaltet sind, dass sie die Funktionalität einer Knotenplatte erfüllen; und einen Trägerkörper, welcher den einlaufseitigen Sammler und den auslaufseitigen Sammler starr miteinander verbindet.

In einer Weiterbildung der Erfindung umfasst der Messaufnehmer weiterhin einlaufseitig und auslaufseitig jeweils mindestens eine, vorzugsweise zwei oder mehr Knotenplatten wobei die Messrohre mit bezüglich der Messaufnehmerlängsebene zueinander symmetrischen Messrohrlängsebenen einlassseitig und auslassseitig jeweils zumindest mittels zumindest einer Knotenplatte miteinander verbunden sind.

In einer Weiterbildung der Erfindung koppeln die Schwingungskoppler jeweils nur zwei Messrohre miteinander.

In eine Weiterbildung der Erfindung besteht zwischen den beiden Schwingungskopplern keine direkte Verbindung.

In einer Weiterbildung der Erfindung weist ein Ruhelagenabstand von Befestigungspunkten eines Schwingungskopplers an den mittels des Schwingungskopplers gekoppelten Messrohren bei Temperaturen zwischen 20°C auf 80°C einen Änderungskoeffizienten, der nicht mehr als 50% insbesondere nicht mehr als 20% vorzugsweise nicht mehr als 10% vom thermischen Ausdehnungskoeffizienten des Materials des Schwingungskopplers abweicht.

Die Erfindung wird nun anhand des in den Zeichnungen dargestellten Ausführungsbeispiels näher erläutert. Es zeigt:
Fig. 1a: eine räumliche Darstellung eines ersten Ausführungsbeispiels eines erfindungsgemäßen Messaufnehmers;
Fig. 1b: eine Seitenansicht des ersten Ausführungsbeispiels eines erfindungsgemäßen Messaufnehmers;
Fig. 1c: eine Frontansicht des ersten Ausführungsbeispiels eines erfindungsgemäßen Messaufnehmers;
Fig. 1d: eine schematische Detailansicht des ersten Ausführungsbeispiels eines erfindungsgemäßen Messaufnehmers;
Fig. 2a: eine Skizze zur Erläuterung von Symmetrien eines bevorzugten Ausführungsbeispiels eines erfindungsgemäßen Messaufnehmers;
Fig. 2b:eine Skizze zur Erläuterung von allgemeinen Symmetriebedingungen eines erfindungsgemäßen Messaufnehmers;
Fig. 3a: einen schematischen Detailquerschnitt in der Messrohrquerebene im Bereich der Schwingungskoppler eines ersten Ausführungsbeispiels;
Fig. 3b: eine schematische Detailaufsicht entlang der Linie A-A aus Fig. 3a auf das zweite und vierte Messrohr des ersten Ausführungsbeispiels;
Fig. 4a: einen schematischen Detailquerschnitt in der Messrohrquerebene im Bereich der Schwingungskoppler eines zweiten Ausführungsbeispiels
Fig. 4b: eine schematische Detailaufsicht entlang der Linie B-B aus Fig. 4a auf das zweite und vierte Messrohr des zweiten Ausführungsbeispiels.

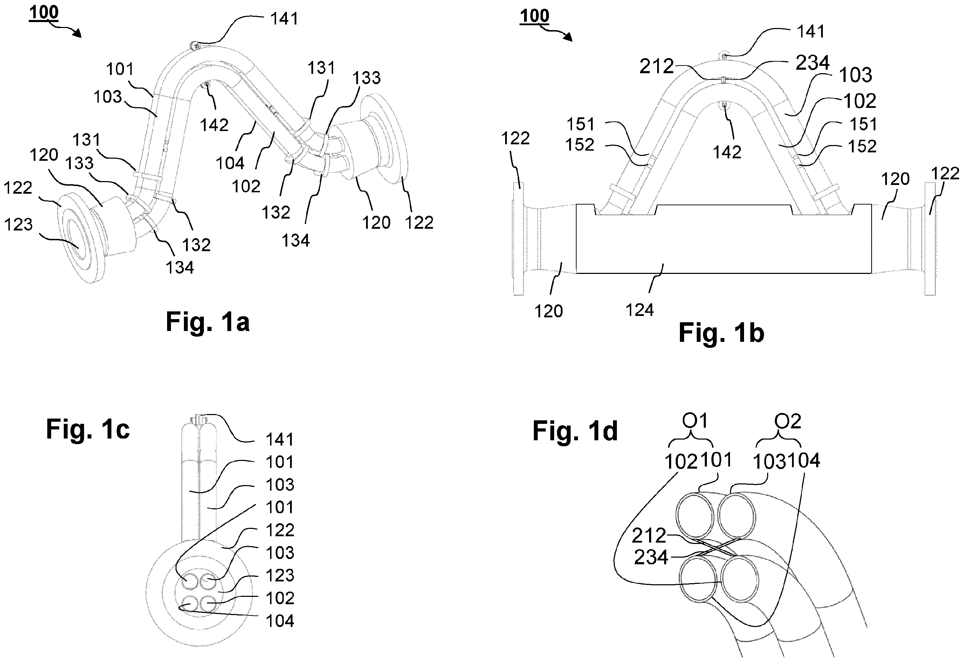

Das in Fign 1a bis 1d dargestellte Ausführungsbeispiel eines erfindungsgemäßen Messaufnehmers 100 umfasst vier gebogene Messrohre 101, 102, 103, 104. Die Messrohre 101, 102, 103, 104 erstrecken sich zwischen einem einlassseitigen Sammler 120 und einem auslassseitigen Sammler 120, und sind mit den Sammlern 120 fest verbunden, beispielsweise durch Einwalzen, Hartlöten oder Schweißen. Zwischen den Sammlern 120 erstreckt sich ein massives Trägerrohr 124, das mit beiden Sammlern fest verbunden ist, wodurch die Sammler 120 starr miteinander gekoppelt sind. Das Trägerrohr 124 weist an seiner Oberseite Öffnungen auf, durch welche die Messrohre 101, 102, 103, 104 von den Sammlern 120 aus dem Trägerrohr 124 heraus und wieder zurück geführt sind.

Die Sammler 120 weisen endständig jeweils einen Flansch 122 auf, mittels dessen der Messaufnehmer 100 in einer Rohrleitung zu installieren ist. Durch Öffnungen 123 in den Flanschen 122 ist ein Medium durch den Messaufnehmer 100, insbesondere dessen Messrohre 101, 102, 103, 104 zu führen, um den Massedurchfluss und/oder die Dichte des Mediums zu bestimmen. Das erste Messrohr101 und das zweite Messrohr 102 sind mittels eines ersten Schwingungskopplers 212 zu einem ersten Oszillator O1 gekoppelt. Das dritte Messrohr 103 und vierte Messrohr 104 sind mittels eines zweiten Schwingungskopplers 234 zu einem zweiten Oszillator 02 gekoppelt (Im Sinne der Übersichtlichkeit sind die Schwingungskoppler in Fig. 1a nicht dargestellt).

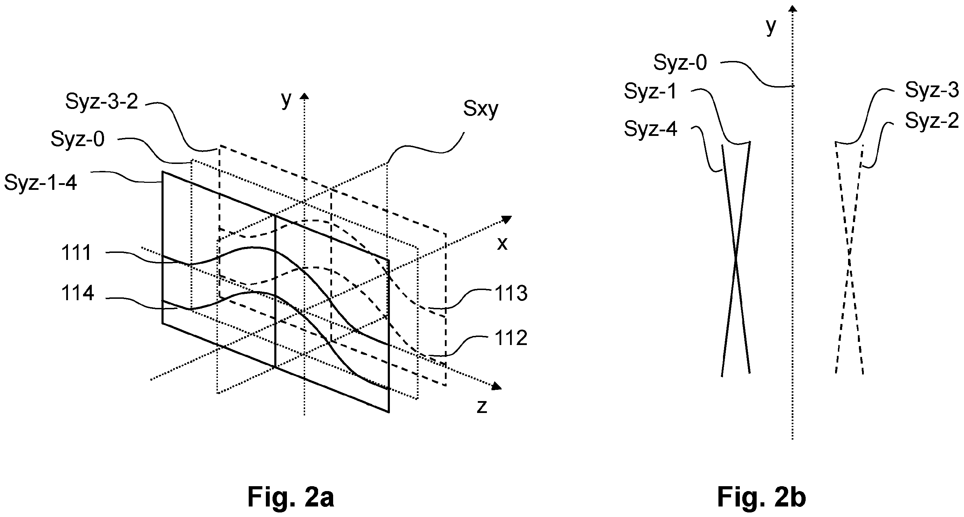

Bevor die Funktionsweise des erfindungsgemäßen Messaufnehmers 100 weiter erläutert wird, sollen kurz anhand von Fign. 2a und 2b einige Symmetrieeigenschaften des erfindungsgemäßen Messaufnehmers erläutert werden. In Fig. 2a sind eine erste Messrohrmittenlinie 111 des ersten Messrohrs 101, eine zweite Messrohrmittenlinie 112 des zweiten Messrohrs 102, eine dritte Messrohrmittenlinie 113 des dritten Messrohrs 103, und eine vierte Messrohrmittenlinie des vierten Messrohrs 104 dargestellt. Die Messrohrmittenlinien sind jeweils gegeneben durch die Mittelpunkte einer Folge von Rohrquerschnitten entlang des Verlaufs eines Messrohrs.

Jedem der Messrohre 101, 102, 103, 104 ist eine Messrohrlängsebene Syz-1, Syz-2, Syz-3, Syz-4 zugeordnet, zu welcher das Integral der Abstandsquadrate der jeweiligen Messrohrmittenlinie minimal ist. Insbesondere können die Messrohrmittenlinien vollständig in der jeweiligen Messrohrlängsebene verlaufen.

Die Messrohrlängsebenen Syz-1, Syz-2, Syz-3, Syz-4 schneiden die Messrohrquerebene Sxy senkrecht, wie in Fig. 2b dargestellt ist, die eine Aufsicht auf die Messrohrquerebene zeigt. In dem dort gezeigten, allgemeinen Fall weist jedes Messrohr eine eigene Messrohrlängsebene Syz-1, Syz-2, Syz-3, Syz-4 auf, wobei die Messrohrquerebenen durchaus paarweise zusammenfallen können, wie in Fig 2a für die Symmetrien des Ausführungsbeispiels aus Fign 1a bis 1d gezeigt ist. Demnach liegen die erste und vierte Messrohrlängsebene in einer gemeinsamen Messrohrlängsebene Syz-1-4 sowie die dritte und zweite Messrohrlängseben in einer gemeinsamen Messrohrlängsebene Syz-3-2.

Jede der Messrohrmittenlinien 111, 112, 113, 114 verläuft symmetrisch zu einer gemeinsamen Messrohrquerebene Sxy, welche demnach senkrecht von den Messrohrmittenlinien geschnitten wird. Die erste Messrohrmittenlinie 111 und die dritte Messrohrmittenlinie 113 verlaufen symmetrisch zueinander bezüglich einer Messaufnehmerlängsebene Syz-0. Weiterhin verlaufen die zweite Messrohrmittenlinie 112 und die vierte Messrohrmittenlinie 114 symmetrisch zueinander bezüglich der Messaufnehmerlängsebene Syz-0.

Die Messrohrlängsebenen Syz-1, Syz-2, Syz-3, Syz-4 verlaufen im ersten Ausführungsbeispiel parallel zur Messaufnehmerlängsebene Syz-0.

Die Schnittlinie zwischen der Messrohrquerebene Sxy und der Messaufnehmerlängsebene Syz-0 definiert eine Y-Achse eines Koordinatensystems zur Beschreibung des Messaufnehmers. Eine Z-Achse des Koordinatensystems verläuft senkrecht zur Messrohrquerebene und schneidet die Y-Achse im gemeinsamen Ursprung. Die X-Achse verläuft senkrecht zu den anderen Achsen und schneidet diese im gemeinsamen Ursprung. Mit den solchermaßen definierten Koordinaten wenden wir uns Fign.1a bis 1d zu.

Das erste Messrohr 101 und das dritte Messrohr 103 sind einlassseitig und auslassseitig jeweils mit zwei Knotenplatten 131 und 133 verbunden, wobei durch die Position der beiden inneren der Knotenplatten 131, also durch jene, welche einlassseitig bzw. auslassseitig jeweils am weitesten vom entsprechenden Sammler 120 entfernt sind, freie Schwingungslängen des ersten Messrohrs 101, und des dritten Messrohrs 103 festgelegt sind. Entsprechend sind das zweite Messrohr 102 und das vierte Messrohr 104 einlassseitig und auslassseitig jeweils mit zwei Knotenplatten 132 und 134 verbunden, wobei durch die Position der beiden inneren der Knotenplatten 132 freie Schwingungslängen des zweiten Messrohrs 102, und des vierten Messrohrs 104 festgelegt sind. Aufgrund der Symmetrien haben die bezüglich der Messumformerlängsebene symmetrisch zueinander verlaufenden Messrohre jeweils die gleiche Schwingungslänge und damit bis auf minimale Abweichungen aufgrund von Fertigungstoleranzen die gleichen Schwingungseigenschaften. D.h., sie hätten beispielsweise ohne die Schwingungskoppler 212, 234 paarweise im Wesentlichen die gleichen Eigenfrequenzen, welche jeweils insbesondere durch die freien Schwingungslängen der Messrohre festgelegt sind. Insofern als das zweite und das vierte Messrohr 102, 104 eine andere Gestalt aufweisen als das erste und das dritte Messrohr, 101, 103, weisen die beiden Paare von Messrohren unterschiedliche Schwingungseigenschaften und insbesondere unterschiedliche Eigenfrequenzen auf, wobei agestrebt ist, die Unterschiede möglichst gering zu halten. Aufgrund der Kopplung der Messrohre durch die beiden Schwingungskoppler 212, 234 zum ersten und zweiten Oszillator O1, 02, schwingen die Messrohre in Biegeschwingsmoden der Oszillatoren, die sich aus Kopplung der Biegeschwingungsmoden der beteiligten Messrohre ergeben. Die Biege weisen Eigenfrequenzen auf, die von jenen der Biegeschwingsmoden der gekoppelten Messrohre abweichen.

Der sogenannte Nutzmode, also jener Biegeschwingungsmode, in dem Messrohre bei einem gattungsgemäßen Messaufnehmer gewöhnlich angeregt werden, spaltet durch die Kopplung der Messrohren in zwei Biegeschwingungsmoden der Oszillatoren, kurz Oszillatorschwingungsmoden auf. In einem ersten Oszillatorschwingungsmode schwingt der erste Oszillator O1 gegen den zweiten Oszillator 02, wobei die beiden Messrohre eines Oszillators jeweils in Phase schwingen, also sich gleichzeitig in positive X-Richtung bewegen. In einem zweiten Oszillatorschwingungsmode schwingt der erste Oszillator O1 gegen den zweiten Oszillator 02, wobei die beiden Messrohre eines Oszillators jeweils in gegenphasig schwingen, also sich gleichzeitig in entgegengesetzte X-Richtung bewegen. Der zweite Oszillatorschwingungsmode weist eine höhere Eigenfrequenz auf als der erste Oszillatorschwingungsmode. Wie stark sich die Eigenfrequenzen der ersten und zweiten Oszillatorschwingungsmoden voneinander unterscheiden hängt von der Steifigkeit der Schwingungskoppler im Verhältnis zur Steifigkeit der Messrohre ab. Gestaltungsmöglichkeiten hierzu sind weiter unten dargestellt. In jedem Fall sollte die Frequenztrennung ein Mehrfaches einer Resonanzbreite der Oszillatorschwingungsmoden aufweisen, um ein Übersprechen zwischen den Oszillatorschwingungsmoden zu verhindern. Die Kopplung der Messrohre zu zwei Oszillatoren bewirkt, dass die Messrohre in definierten Phasen zueinander Schwingen, und dass sich die Schwingungsmoden nicht gegenseitig stören.

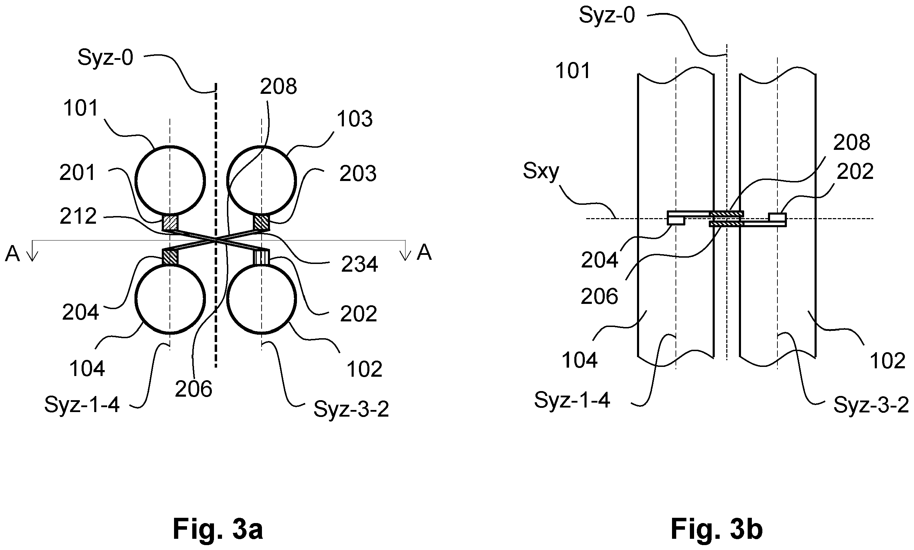

Eine erste Ausgestaltung von Schwingungskopplern ist in Fign. 3a und 3b dargestellt. Fig. 3a zeigt einen vereinfachten Querschnitt der Messrohre 101, 102, 103 104 in der Messrohrquerebene. Ein erster Schwingungskoppler 212 erstreckt sich diagonal vom Sattelpunkt des ersten Messrohrs 101 zum Scheitelpunkt des zweiten Messrohrs 102. Der erste Schwingungskoppler 212 umfasst einen ersten geraden Kopplerstreifen 206, der sich zwischen einem ersten Kopplerfuß 201 und einem zweiten Kopplerfuß 202 erstreckt. Der erste und zweite Kopplerfuß 201, 202 sind am Sattelpunkt des ersten Messrohrs 101 bzw. Scheitelpunkt des zweiten Messrohrs 202 mittels Fügen, insbesondere Schweißen oder Hartlöten fixiert. Der erste Koppelstreifen 206 ist entweder einstückig mit den zugehörigen Kopplerfüßen 201, 202 ausgebildet oder durch Fügen mit diesen verbunden.

Ein zweiter Schwingungskoppler 234 erstreckt sich diagonal vom Sattelpunkt des dritten Messrohrs 103 zum Scheitelpunkt des vierten Messrohrs 104. Der zweite Schwingungskoppler 234 umfasst einen zweiten geraden Koppelstreifen 206, der sich zwischen einem dritten Kopplerfuß 203 und einem vierten Kopplerfuß 204 erstreckt. Der dritte und vierte Kopplerfuß 203, 204 sind am Sattelpunkt des dritten Messrohrs 103 bzw. Scheitelpunkt des vierten Messrohrs 204 mittels Fügen, insbesondere Schweißen oder Hartlöten fixiert. Der zweite Koppelstreifen 206 ist entweder einstückig mit den zugehörigen Kopplerfüßen 203, 204 ausgebildet oder durch Fügen mit diesen verbunden. Die in Fig. 3b gezeigte Aufsicht auf das dritte und vierte Messrohr 103, 104 aus der Ebene A-A in Fig. 3a zeigt die Position des zweiten und vierten Kopplerfußes 102, 104 sowie den Verlauf der Koppelstreifen 206, 208 unterhalb der Ebene A-A. Die Koppelstreifen 206, 208 sind voneinander beabstandet um Reibung zwischen ihnen auszuschließen, aber sie sind möglichst dicht an der Messrohrquerebene positioniert um die Einleitung von Biegemomenten, die insbesondere den so genannten Coriolis-Mode beeinflussen könnten, möglichst gering zu halten. Die Schwingungskoppler sind aus einem metallischen Werkstoff gefertigt, vorzugsweise aus dem gleichen Werkstoff wie die Messrohre. Im Sinne der Übersichtlichkeit sind in Fig. 3a Schwingungserreger, die ebenfalls in der Messrohrquerebene positioniert sind, nicht dargestellt.

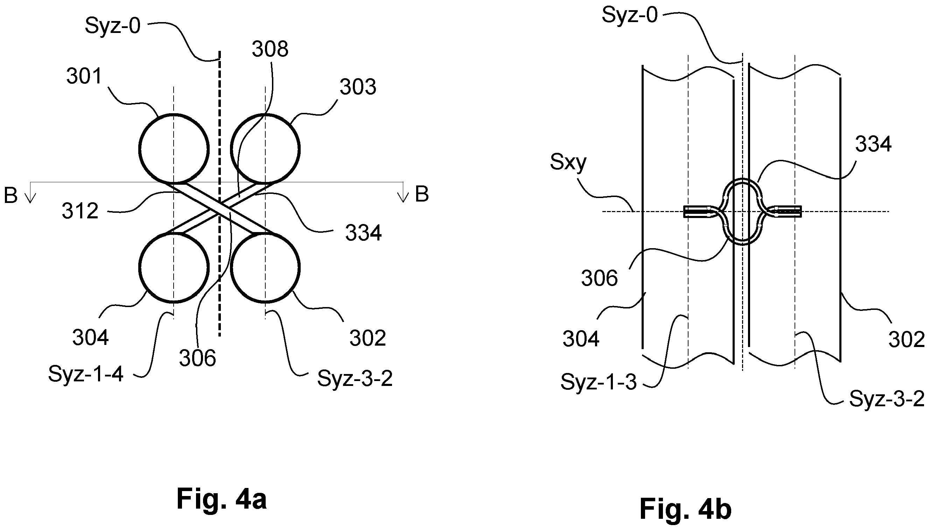

Eine zweite Ausgestaltung von Schwingungskopplern ist in Fign. 4a und 4b dargestellt. Fig. 4a zeigt einen vereinfachten Querschnitt der Messrohre 301, 302, 303 304 in der Messrohrquerebene. Ein erster Schwingungskoppler 312 erstreckt sich diagonal vom Sattelpunkt des ersten Messrohrs 301 zum Scheitelpunkt des zweiten Messrohrs 302. Der erste Schwingungskoppler 312 umfasst einen ersten bogenförmigen Kopplerstreifen 306, der mit seinen Enden am Sattelpunkt des ersten Messrohrs 301 und Scheitelpunkt des zweiten Messrohrs 302 mittels Fügen, insbesondere Schweißen oder Hartlöten fixiert ist.

Ein zweiter Schwingungskoppler 334 erstreckt sich diagonal vom Sattelpunkt des dritten Messrohrs 303 zum Scheitelpunkt des vierten Messrohrs 304. Der zweite Schwingungskoppler 334 umfasst einen zweiten bogenförmigen Koppelstreifen 308, der mit seinen Enden am Sattelpunkt des dritten Messrohrs 303 bzw. Scheitelpunkt des vierten Messrohrs 304 mittels Fügen, insbesondere Schweißen oder Hartlöten fixiert ist. Die in Fig. 3b gezeigte Aufsicht auf das zweite und vierte Messrohr 302, 304 aus der Ebene B-B in Fig. 4a zeigt den Verlauf der beiden Koppelstreifen 306, 308 unterhalb der Ebene B-B. Der bogenförmige Verlauf der Koppelstreifen 306, 308 ermöglicht es, die Koppelstreifen aneinander vorbei zu führen, und dennoch die Enden der Koppelstreifen in oder nahe der Messrohrquerebene zu positioniert um die Einleitung von Biegemomenten, die insbesondere den so genannten Coriolis-Mode beeinflussen könnten, zu minimieren. Die Schwingungskoppler 312, 334 sind aus einem metallischen Werkstoff gefertigt, vorzugsweise aus dem gleichen Werkstoff wie die Messrohre. Im Sinne der Übersichtlichkeit sind in Fig. 4a Schwingungserreger, die ebenfalls in der Messrohrquerebene positioniert sind, nicht dargestellt. Durch Gestaltung des gebogenen Verlaufs der Koppelstreifen 306, 308 kann die Steifigkeit der Schwingungskoppler kontrolliert werden. Damit kann Frequenztrennung zwischen dem ersten und dem zweiten Oszillatorschwingungsmode auf einen gewünschten Wert eingestellt werden. Zudem können mechanische Spannungsspitzen insbesondere beim zweiten Oszillatorschwingungsmode vermieden werden.

Vorzugsweise wird der Messaufnehmer im ersten Oszillatorschwingungsmode betrieben, welcher das Material der Schwingungskoppler und die zugehörigen Befestigungen am Messrohr weniger beansprucht, wodurch insbesondere das Risiko plastischer Verformungen im Bereich der Schwingungskoppler erheblich reduziert ist. Grundsätzlich kann der Messaufnehmer aber auch im zweiten Oszillatorschwingungsmode betrieben werden, insbesondere zu Diagnosezwecken.

In der Darstellung der vorliegenden Erfindung besteht hinsichtlich der Definition einer gegenphasigen und einer gleichphasigen Schwingung der Zwang zu einer willkürlichen Festlegung, der im diagonalen Verlauf der Schwingungskoppler begründet ist. Was aus der Perspektive jeweils eines Schwingungskopplers in Phase erfolgt (gleichzeitige Bewegung in positive x-Richtung), ist bezogen auf die Messaufnehmerlängsebene gegenphasig (das erste und das dritte Messrohr nähern sich einander, während sich das vierte und das zweite Messrohr voneinander entfernen). Vorliegend fiel die Entscheidung den niederfrequenten, spannungsärmeren ersten Oszillatorschwingungsmode als "gleichphasig" zu bezeichnen. Ein Vorteil der Erfindung liegt jedoch gerade in dieser Mehrdeutigkeit der Phasenbeziehung aufgrund der diagonalen Kopplung. Denn in dem bevorzugten ersten Oszillatorschwingungsmode schwingt aus Perspektive der Sammler 120 das äußere Messrohrpaar welches aus dem ersten und dritten Messrohr 101, 103 gebildet ist gegenphasig zum inneren Messrohrpaar, dass aus dem zweiten und vierten Messrohr 102, 104 gebildet ist. Wenn daher beispielsweise von einem der Messrohrpaare in X-Richtung dehnende Spannungen auf die Sammler wirken, gehen zur gleichen Zeit vom anderen Messrohrpaar entgegengesetzte Spannungen aus, so dass sich diese zumindest teilweise gegenseitig kompensieren. Auf diese Weise ist die Dissipation von Schwingungsenergie in die Sammler bzw. eine im Einsatz des Messaufnehmers angeschlossene Rohrleitung minimiert. Entsprechend kann hierdurch auch die Einkopplung von Störungen über die Sammler reduziert werden.

Zum Anregen von der Biegeschwingungen der Messrohre der Oszillatoren O1 und O2 in X-Richtung ist in der Messrohrquerebene Sxy zwischen dem ersten Messrohr 101 und dem dritten Messrohr 103 eine elektrodynamische Erregeranordnung 141 angeordnet. Die Erregeranordnung 141 umfasst eine Tauchspule an einem der beiden Messrohre und einen Tauchkörper am gegenüberliegenden Messrohr. Die Erregeranordnung ist an den Scheitelpunkten des ersten und dritten Messrohrs in der Messrohrquerebene positioniert. Weiterhin ist eine zweite elektrodynamische Erregeranordnung 142 vorgesehen, die zwischen dem zweitem Messrohr 102 und dem vierten Messrohr wirkt, und insbesondere baugleich zur ersten Erregeranordnung ist. Die zweite Erregeranordnung 142 ist an den Sattelpunkten des zweiten und vierten Messrohrs in der Messrohrquerebene positioniert (Im Sinne der Übersichtlichkeit sind die Erregeranordnungen in Fig. 1d nicht dargestellt).

Durch Speisen der Tauchspulen mit Wechselstromsignalen geeigneter Frequenz und Phasenlage werden die Messrohre zu Schwingungen angeregt, wobei die Schwingungen über den ersten Schwingungskoppler 212 zwischen dem ersten Messerohr 101 und dem zweiten Messrohr 102, sowie den zweiten Schwingungskoppler 234 zwischen dem dritten Messrohr 103 und dem vierten Messrohrauf 104 gekoppelt sind.

Beim ersten, gleichphasigen Oszillatorschwingungsmode müssen die beiden Erregeranordnungen gegenphasig eine anziehende Kraft ausüben. Beim zweiten, gegenphasigen Oszillatorschwingungsmode müssen die beiden Erregeranordnungen gleichphasig eine anziehende Kraft ausüben.

Zum Erfassen der Schwingungen zwischen dem ersten Messrohr 101 und dem dritten Mesrohr 103 sind symmetrisch zur Messrohrquerebene zwischen dem ersten Messrohr 101 und dem dritten Messrohr 103 zwei elektrodynamische Sensoranordnungen 151 angeordnet mit jeweils einer Tauchspule an einem Rohr und einem Tauchkörper am anderen Rohr. Entsprechend sind zum Erfassen der Schwingungen zwischen dem zweiten Messrohr 102 und dem vierten Messrohr 104 symmetrisch zur Messrohrquerebene zwischen dem zweiten Messrohr 102 und dem vierten Messrohr 104 zwei elektrodynamische Sensoranordnungen 152 angeordnet mit jeweils einer Tauchspule an einem Rohr und einem Tauchkörper am anderen Rohr. Einzelheiten dazu sind dem Fachmann bekannt, und brauchen hier nicht näher erläutert zu werden. (Im Sinne der Übersichtlichkeit wurden die Positionen des Erregeranordnung und der Sensoranordnungen lediglich in Fig. 1b dargestellt und mit Bezugszeichen versehen).

## Patentansprüche

1. Messaufnehmer vom Vibrationstyp zum Messen der Dichte und/oder des Massedurchflusses eines Mediums, mit:
einem ersten Oszillator (O1);
einem zweiten Oszillator (02);
mindestens einem Erreger;
mindestens zwei Schwingungssensoren;
wobei der erste Oszillator (O1) umfasst:
ein erstes Messrohr (101), welches eine erste Messrohrmittenlinie (111) aufweist, die spiegelsymmetrisch zu einer Messrohrquerebene (Sxy) verläuft, wobei das erste Messrohr (101) dazu eingerichtet ist, in einem ersten, bezüglich der Messrohrquerebene (Sxy) spiegelsymmetrischen Biegeschwingungsmode zu schwingen,
wobei das erste Messrohr (101) in seiner Ruhelage gebogen ist,
wobei eine erste Messrohrlängsebene gegeben ist (Syz-1; Syz-1-4), in welcher das Integral über die Abstandsquadrate zwischen der ersten Messrohrmittenlinie (111) und der ersten Messrohrlängsebene (Syz-1; Syz-1-4) minimal ist,
wobei das erste Messrohr (101) im ersten Biegeschwingungsmode im Wesentlichen senkrecht zur ersten Messrohrlängsebene (Syz-1; Syz-1-4) schwingt,
ein zweites Messrohr (102), welches eine zweite Messrohrmittenlinie (112) aufweist, die spiegelsymmetrisch zu der Messrohrquerebene (Sxy) verläuft, wobei das zweite Messrohr (102) dazu eingerichtet ist, in dem ersten, bezüglich der Messrohrquerebene (Sxy) spiegelsymmetrischen Biegeschwingungsmode zu schwingen,
mindestens einen ersten elastischen Schwingungskoppler (212, 312), welcher das erste Messrohr (101) und das zweite Messrohr (102) miteinander zu dem ersten Oszillator (O1) koppelt; und
wobei das zweite Messrohr (102) in seiner Ruhelage gebogen ist,
wobei eine zweite Messrohrlängsebene (Syz-2; Syz-3-2) gegeben ist, in welcher das Integral über die Abstandsquadrate zwischen der zweiten Messrohrmittenlinie (112) und der zweiten Messrohrlängsebene (Syz-2 Syz-3-2) minimal ist,
wobei das zweite Messrohr (102) im ersten Biegeschwingungsmode im Wesentlichen senkrecht zur zweiten Messrohrlängsebene (Syz-2; Syz-3-2) schwingt,
wobei das erste Messrohr (101) und das zweite Messrohr (102) in der Ruhelage in die gleiche Richtung gebogen sind,
wobei der zweite Oszillator (02) umfasst:
ein drittes Messrohr (103), welches eine dritte Messrohrmittenlinie (113) aufweist, die spiegelsymmetrisch zu der Messrohrquerebene (Sxy) verläuft, wobei das dritte Messrohr (103) dazu eingerichtet ist, in einem ersten, bezüglich der Messrohrquerebene (Sxy) spiegelsymmetrischen Biegeschwingungsmode zu schwingen;
ein viertes Messrohr (104), welches eine vierte Messrohrmittenlinie (114) aufweist, die spiegelsymmetrisch zu der Messrohrquerebene (Sxy) verläuft, wobei das vierte Messrohr (104) dazu eingerichtet ist, in dem ersten, bezüglich der Messrohrquerebene (Sxy) spiegelsymmetrischen Biegeschwingungsmode zu schwingen; und
mindestens einen zweiten elastischen Schwingungskoppler (234, 334) welcher das dritte Messrohr (103) und das vierte Messrohr (104) miteinander zu dem zweiten Oszillator (O2) koppelt,
wobei das dritte Messrohr in seiner Ruhelage gebogen ist,
wobei eine dritte Messrohrlängsebene (Syz-3; Syz-3-2) gegeben ist, in welcher das Integral über die Abstandsquadrate zwischen der dritten Messrohrmittenlinie (113) und der dritten Messrohrlängsebene (Syz-3; Syz-3-2) minimal ist,
wobei das dritte Messrohr (103) im ersten Biegeschwingungsmode im Wesentlichen senkrecht zur dritten Messrohrlängsebene (Syz-3; Syz-3-2) schwingt,
wobei das vierte Messrohr (104) in seiner Ruhelage gebogen ist, wobei eine vierte Messrohrlängsebene (Syz-4; Syz-1-4) gegeben ist, in welcher das Integral über die Abstandsquadrate zwischen der vierten Messrohrmittenlinie (114) und der vierten Messrohrlängsebene (Syz-4; Syz-1-4) minimal ist, wobei das vierte Messrohr (104) im ersten Biegeschwingungsmode im Wesentlichen senkrecht zur vierten Messrohrlängsebene (Syz-4; Syz-1-4) schwingt,
wobei das dritte Messrohr (103) und das vierte Messrohr (104) in ihrer Ruhelage in die gleiche Richtung gebogen sind,
wobei der Messaufnehmer eine Messaufnehmerlängsebene (Syz-0) aufweist, die senkrecht zur Messrohrquerebene (Sxy) verläuft,
wobei die erste Messrohrmittenlinie (111) bezüglich der Messaufnehmerlängsebene (Syz-0) spiegelsymmetrisch zur dritten Messrohrmittenlinie (113) verläuft,
wobei die zweite Messrohrmittenlinie (112) bezüglich der Messaufnehmerlängsebene (Syz-0) spiegelsymmetrisch zur vierten Messrohrmittenlinie (114) verläuft,
wobei die Messaufnehmerlängsebene (Syz-0) zwischen dem ersten Messrohr (101) und dem zweiten Messrohr (102) verläuft, wobei die Messaufnehmerlängsebene (Syz-0) zwischen dem dritten Messrohr (103) und dem vierten Messrohr (104) verläuft,
wobei der Erreger (140) dazu eingerichtet ist, Oszillatorschwingungen der beiden Oszillatoren (O1, 02) gegeneinander anzuregen.

2. Messaufnehmer nach Anspruch 1,
wobei der erste Schwingungskoppler (212) eine erste effektive Federkonstante aufweist, wobei der zweite Schwingungskoppler (234) eine zweite effektive Federkonstante aufweist, wobei die zweite Federkonstante um nicht mehr als 6% insbesondere nicht mehr als 3% und bevorzugt nicht mehr als 1% von der ersten Federkonstanten abweicht.

3. Messaufnehmer nach einem der vorhergehenden Ansprüche,
wobei der Messaufnehmer eine erste Eigenfrequenz aufweist, für einen Schwingungsmode, bei dem die beiden Messrohre (101, 102) des ersten Oszillators (O1) näherungsweise in dem ersten Biegeschwingungsmode miteinander in Phase schwingen, und bei dem die beiden Messrohre (103, 104) des zweiten Oszillators (02) näherungsweise in dem ersten Biegeschwingungsmode miteinander in Phase schwingen,
wobei der Messaufnehmer eine zweite Eigenfrequenz aufweist für einen Schwingungsmode, bei dem die beiden Messrohre (101, 102) des ersten Oszillators (O1) näherungsweise gegenphasig schwingen, und bei dem die beiden Messrohre (103, 104) des zweiten Oszillators (02) näherungsweise in dem ersten Biegeschwingungsmode gegenphasig schwingen,
wobei die zweite Eigenfrequenz größer ist als die erste Eigenfrequenz.

4. Messaufnehmer nach Anspruch 3,
wobei die zweite Eigenfrequenz um mindestens 4%, insbesondere mindestens 8%, vorzugsweise mindestens mindestens 16% größer ist als die erste Eigenfrequenz.

5. Messaufnehmer nach einem der vorhergehenden Ansprüche,
wobei das erste Messrohr (101) und das dritte Messrohr (103) ohne die elastischen Schwingungskoppler für den ersten Biegeschwingungsmode eine erste effektive Messrohreigenfrequenz aufweisen, wenn sie gegeneinander schwingen,
wobei das zweite Messrohr (102) und das vierte Messrohr (104) ohne die elastischen Schwingungskoppler für den ersten Biegeschwingungsmode eine zweite effektive Messrohreigenfrequenz aufweisen, wenn sie gegeneinander schwingen, wobei die beiden mittleren Messrohreigenfrequenzen um nicht mehr als 8 % insbesondere nicht mehr als 4 % und bevorzugt nicht mehr als 2 % und besonders bevorzugt nicht mehr als 1 % von, ihrem arithmetrischen Mittelwert abweichen.

6. Messaufnehmer nach einem der vorhergehenden Ansprüche,
wobei die Messrohrlängsebenen (Syz-1-4, Syz-3-2) um nicht mehr als 8°, insbesondere nicht mehr als 4°, vorzugsweise nicht mehr als 2° und besonders bevorzugt nicht mehr als 1° gegenüber der Messaufnehmerlängsebene (Syz-0) geneigt sind.

7. Messaufnehmer nach einem der vorhergehenden Ansprüche, wobei mindestens einer, vorzugsweise beide, der elastischen Schwingungskoppler mit den jeweils durch ihn gekoppelten Messrohren an Befestigungspunkten verbunden sind, welche symmetrisch zur Messrohrquerebene (Sxy) angeordnet sind.

8. Messaufnehmer nach einem der vorhergehenden Ansprüche,
weiterhin umfassend:
einlaufseitig und auslaufseitig jeweils einen Sammler (120), wobei die Messrohre jeweils einlaufseitig und
auslaufseitig mit einem Sammler strömungstechnisch zusammengefasst sind, wobei die Sammler insbesondere derart ausgestaltet sind, dass sie die Funktionalität einer Knotenplatte erfüllen; und
einen Trägerkörper (124), welcher den einlaufseitigen Sammler und den auslaufseitigen Sammler starr miteinander verbindet.

9. Messaufnehmer nach einem der vorhergehenden Ansprüche,
weiterhin umfassend:
Einlaufseitig und auslaufseitig jeweils mindestens eine, vorzugsweise zwei oder mehr Knotenplatten wobei die Messrohre mit bezüglich der Messaufnehmerlängsebene zueinander symmetrischen Messrohrlängsebenen einlassseitig und auslasseitig jeweils zumindest mittels zumindest einer Knotenplatte miteinander verbunden sind.

10. Messaufnehmer nach einem der vorhergehenden Ansprüche,
wobei die elastischen Schwingungskoppler jeweils nur zwei Messrohre miteinander koppeln.

11. Messaufnehmer nach einem der vorhergehenden Ansprüche,
wobei zwischen den beiden elastischen Schwingungskopplern keine direkte Verbindung besteht.

12. Messaufnehmer nach einem der vorhergehenden Ansprüche,
wobei der Ruhelagenabstand der Befestigungspunkte eines Schwingungskopplers an den mittels des Schwingungskopplers gekoppelten Messrohren bei Temperaturen zwischen 20°C auf 80°C einen Änderungskoeffizienten aufweist, der nicht mehr als 50% insbesondere nicht mehr als 20% vorzugsweise nicht mehr als 10% vom thermischen Ausdehnungskoeffizienten des Materials des Schwingungskopplers abweicht.

## Claims

1. Vibronic-type sensor designed to measure the density and/or the mass flow of a medium, said sensor comprising:
a first oscillator (O1);
a second oscillator (02);
at least one exciter;
at least two vibration sensors;
wherein the first oscillator (O1) comprises:
a first measuring tube (101) which has a first measuring tube middle line (111), which is in mirror symmetry to a measuring tube transverse plane (Sxy), wherein the first measuring tube (101) is designed to vibrate in a first vibration mode in mirror symmetry in relation to the measuring tube transverse plane (Sxy),
wherein the first measuring tube (101) is curved in its rest position,
wherein a first measuring tube longitudinal plane (Syz-1; Syz-1-4) is defined in which the integral over the squared distance between the first measuring tube middle line (111) and the first measuring tube longitudinal plane (Syz-1; Syz-1-4) is minimal,
wherein the first measuring tube (101) vibrates in the first flexural vibration mode essentially perpendicularly to the first measuring tube longitudinal plane (Syz-1; Syz-1-4),
wherein a second measuring tube (102) has a second measuring tube middle line (112), wherein said line extends in mirror symmetry in relation to the measuring tube transverse plane (Sxy), wherein the second measuring tube (102) is designed to vibrate in the first flexural vibration mode that is in mirror symmetry in relation to the measuring tube transverse plane (Sxy),
at least a first elastic vibration coupler (212, 312), which couples the first measuring tube (101) and the second measuring tube (102) to one another to form the first oscillator (O1); and
wherein the second measuring tube (102) is curved in its rest position,
wherein a second measuring tube longitudinal plane (Syz-2; Syz-3-2) is defined in which the integral over the squared distance between the second measuring tube middle line (112) and the second measuring tube longitudinal plane (Syz-2 Syz-3-2) is minimal,
wherein the second measuring tube (102) vibrates in the first flexural vibration mode essentially perpendicularly to the second measuring tube longitudinal plane (Syz-2; Syz-3-2),
wherein the first measuring tube (101) and the second measuring tube (102) are curved in the same direction in the rest position,
wherein the second oscillator (02) comprises:
a third measuring tube (103), which has a third measuring tube middle line (113) that is in mirror symmetry to the measuring tube transverse plane (Sxy), wherein the third measuring tube (103) is designed to vibrate in a first flexural vibration mode that is in mirror symmetry to the measuring tube transverse plane (Sxy);
a fourth measuring tube (104), which has a fourth measuring tube middle line (114) that is in mirror symmetry to the measuring tube transverse plane (Sxy), wherein the fourth measuring tube (104) is designed to vibrate in the first flexural vibration mode that is in mirror symmetry to the measuring tube transverse plane (Sxy); and
at least a second elastic vibration coupler (234, 334) which couples the third measuring tube (103) and the fourth measuring tube (104) with one another to form the second oscillator (02),
wherein the third measuring tube is curved in its rest position,
wherein a third measuring tube longitudinal plane (Syz-3; Syz-3-2) is defined in which the integral over the squared distance between the third measuring tube middle line (113) and the third measuring tube longitudinal plane (Syz-3; Syz-3-2) is minimal,
wherein the third measuring tube (103) vibrates in the first flexural vibration mode essentially perpendicularly to the third measuring tube longitudinal plane (Syz-3; Syz-3-2),
wherein the fourth measuring tube (104) is curved in its rest position, wherein a fourth measuring tube longitudinal plane (Syz-4; Syz-1-4) is defined in which the integral over the squared distance between the fourth measuring tube middle line (114) and the fourth measuring tube longitudinal plane (Syz-4; Syz-1-4) is minimal, wherein the fourth measuring tube (104) vibrates in the first flexural vibration mode essentially perpendicularly to the fourth measuring tube longitudinal plane (Syz-4; Syz-1-4),
wherein the third measuring tube (103) and the fourth measuring tube (104) are curved in the same direction in their rest position,
wherein the sensor has a sensor longitudinal plane (Syz-0) which extends perpendicularly to the measuring tube transverse plane (Sxy),
wherein the first measuring tube middle line (111) extends in mirror symmetry to the third measuring tube middle line (113) in relation to the sensor longitudinal plane (Syz-0),
wherein the second measuring tube middle line (112) extends in mirror symmetry to the fourth measuring tube middle line (114) in relation to the sensor longitudinal plane (Syz-0),
wherein the sensor longitudinal plane (Syz-0) extends between the first measuring tube (101) and the second measuring tube (102), wherein the sensor longitudinal plane (Syz-0) extends between the third measuring tube (103) and the fourth measuring tube (104),
wherein the exciter (140) is designed to produce oscillator vibrations of the two oscillators (O1, 02) in relation to one another.

2. Sensor as claimed in Claim 1,
wherein the first vibration coupler (212) has a first effective spring constant, wherein the second vibration coupler (234) has a second effective spring constant, wherein the second spring constant does not deviate from the first spring constant by more than 6%, particularly by not more than 3% and preferably by not more than 1%.

3. Sensor as claimed in one of the previous claims,
wherein the sensor has a first natural frequency for a vibration mode in which the two measuring tubes (101, 102) of the first oscillator (O1) vibrate approximately in phase with one another in the first flexural vibration mode, and in which the two measuring tubes (103, 104) of the second oscillator (02) vibrate approximately in phase with one another in the first flexural vibration mode,
wherein the sensor has a second natural frequency for a vibration mode in which the two measuring tubes (101, 102) of the first oscillator (O1) vibrate approximately out of phase, and in which the two measuring tubes (103, 104) of the second oscillator (02) vibrate approximately out of phase in the first flexural vibration mode,
wherein the second natural frequency is greater than the first natural frequency.

4. Sensor as claimed in Claim 3,
wherein the second natural frequency is greater than the first natural frequency by at least 4%, particularly by at least 8%, preferably by at least 16%.

5. Sensor as claimed in one of the previous claims,
wherein the first measuring tube (101) and the third measuring tube (103), without the elastic vibration couplers for the first flexural vibration mode, have a first effective measuring tube natural frequency when they vibrate against one another, wherein the second measuring tube (102) and the fourth measuring tube (104), without the elastic vibration couplers for the first flexural vibration mode, have a second effective measuring tube natural frequency when they vibrate against one another, wherein the two average measuring tube natural frequencies do not deviate by more than 8%, particularly not by more than 4% and preferably not by more than 2% and particularly preferably not by more than 1%, from their arithmetic mean.

6. Sensor as claimed in one of the previous claims,
wherein the measuring tube longitudinal planes (Syz-1-4, Syz-3-2) are inclined by not more than 8°, particularly by not more than 4°, preferably by not more than 2° and particularly preferably by not more than 1° in relation to the sensor longitudinal plane (Syz-0).

7. Sensor as claimed in one of the previous claims,
wherein at least one, preferably the two, of the elastic vibration couplers is connected to the respective measuring tubes, which they couple, at attachment points which are arranged symmetrically in relation to the measuring tube transverse plane (Sxy).

8. Sensor as claimed in one of the previous claims,
further comprising:
a collector (120) on the inlet side and on the outlet side, wherein the measuring tubes are grouped in terms of flow with a collector on the inlet side and on the outlet side, wherein the collectors are particularly designed in such a way that they meet the functionality of a node plate; and
a carrier body (124) which connects the collector on the inlet side and the collector on the outlet side in a rigid manner.

9. Sensor as claimed in one of the previous claims,
further comprising:
at least one, preferably two or more, node plates on the inlet side and outlet side, wherein the measuring tubes are connected to one another on the inlet side and on the outlet side by means of the at least one node plate, the measuring tube longitudinal planes being symmetrical to one another in relation to the sensor longitudinal plane.

10. Sensor as claimed in one of the previous claims,
wherein the elastic vibration couplers only couple two measuring tubes at one time.

11. Sensor as claimed in one of the previous claims,
wherein there is no direct connection between the two elastic vibration couplers.

12. Sensor as claimed in one of the previous claims,
wherein the rest position distance of the attachment points of a vibration coupler at the measuring tubes coupled by means of the vibration coupler has, at temperatures between 20 °C and 80 °C, a change coefficient that does not deviate by more than 50%, particularly by not more than 20%, preferably by not more than 10%, from the thermal expansion coefficient of the material of the vibration coupler.

## Revendications

1. Capteur du type à vibration destiné à la mesure de la densité et/ou du débit massique d'un produit, lequel capteur comprend :
un premier oscillateur (O1) ;
un deuxième oscillateur (02) ;
au moins un excitateur ;
au moins deux capteurs de vibrations ;
le premier oscillateur (O1) comprenant :
un premier tube de mesure (101) présentant une première ligne médiane de tube de mesure (111), laquelle ligne est symétrique par rapport à un plan transversal de tube de mesure (Sxy), le premier tube de mesure (101) étant conçu pour vibrer dans un premier mode de vibration de flexion symétrique par rapport au plan transversal de tube de mesure (Sxy),
le premier tube de mesure (101) étant courbé dans sa position de repos,
un premier plan longitudinal de tube de mesure (Syz-1 ; Syz-1-4) étant défini, plan dans lequel l'intégrale sur les carrés des distances entre la ligne médiane du premier tube de mesure (111) et le premier plan longitudinal de tube de mesure (Syz-1 ; Syz-1-4) est minimale,
le premier tube de mesure (101) vibrant dans le premier mode de vibration de flexion pour l'essentiel perpendiculairement au premier plan longitudinal de tube de mesure (Syz-1 ; Syz-1-4),
un deuxième tube de mesure (102) présentant une deuxième ligne médiane de tube de mesure (112), laquelle ligne s'étend symétriquement par rapport au plan transversal de tube de mesure (Sxy), le deuxième tube de mesure (102) étant conçu pour vibrer dans le premier mode de vibration de flexion symétriquement par rapport au plan transversal de tube de mesure (Sxy),
au moins un premier coupleur élastique de vibrations (212, 312), lequel couple le premier tube de mesure (101) et le deuxième tube de mesure (102) l'un à l'autre pour former le premier oscillateur (O1) ; et
le deuxième tube de mesure (102) étant courbé dans sa position de repos,
un deuxième plan longitudinal de tube de mesure (Syz-2 ; Syz-3-2) étant défini, plan dans lequel l'intégrale sur les carrés des distances entre la ligne médiane du deuxième tube de mesure (112) et le deuxième plan longitudinal de tube de mesure (Syz-2 Syz-3-2) est minimale,
le deuxième tube de mesure (102) vibrant dans le premier mode de vibration de flexion pour l'essentiel perpendiculairement au deuxième plan longitudinal de tube de mesure (Syz-2 ; Syz-3-2),
le premier tube de mesure (101) et le deuxième tube de mesure (102) étant courbés dans la même direction dans la position de repos,
le deuxième oscillateur (02) comprenant :
un troisième tube de mesure (103), lequel présente une troisième ligne médiane de tube de mesure (113) qui est symétrique par rapport au plan transversal de tube de mesure (Sxy), le troisième tube de mesure (103) étant conçu pour vibrer dans un premier mode de vibration de flexion symétrique par rapport au plan transversal de tube de mesure (Sxy) ;
un quatrième tube de mesure (104), lequel présente une quatrième ligne médiane de tube de mesure (114) qui est symétrique par rapport au plan transversal de tube de mesure (Sxy), le quatrième tube de mesure (104) étant conçu pour vibrer dans le premier mode de vibration de flexion symétrique par rapport au plan transversal de tube de mesure (Sxy) ; et
au moins un deuxième coupleur élastique de vibrations (234, 334) qui couple le troisième tube de mesure (103) et le quatrième tube de mesure (104) l'un à l'autre pour former le deuxième oscillateur (02),
le troisième tube de mesure étant courbé dans sa position de repos,
un troisième plan longitudinal de tube de mesure (Syz-3 ; Syz-3-2) étant défini, plan dans lequel l'intégrale sur les carrés des distances entre la troisième ligne médiane de tube de mesure (113) et le troisième plan longitudinal de tube de mesure (Syz-3 ; Syz-3-2) est minimale,
le troisième tube de mesure (103) vibrant dans le premier mode de vibration de flexion pour l'essentiel perpendiculairement au troisième plan longitudinal du tube de mesure (Syz-3 ; Syz-3-2),
le quatrième tube de mesure (104) étant courbé dans sa position de repos, un quatrième plan longitudinal de tube de mesure (Syz-4 ; Syz-1-4) étant défini, plan dans lequel l'intégrale sur les carrés des distances entre la quatrième ligne médiane de tube de mesure (114) et le quatrième plan longitudinal de tube de mesure (Syz-4 ; Syz-1-4) est minimale, le quatrième tube de mesure (104) vibrant dans le premier mode de vibration de flexion pour l'essentiel perpendiculairement au quatrième plan longitudinal de tube de mesure (Syz-4 ; Syz-1-4),
le troisième tube de mesure (103) et le quatrième tube de mesure (104) étant courbés dans la même direction dans leur position de repos,
le capteur présentant un plan longitudinal de capteur (Syz-0) qui s'étend perpendiculairement au plan transversal de tube de mesure (Sxy),
la première ligne médiane de tube de mesure (111) s'étendant par rapport au plan longitudinal de capteur (Syz-0) de manière symétrique par rapport à la troisième ligne médiane de tube de mesure (113),
la deuxième ligne médiane du tube de mesure (112) s'étendant par rapport au plan longitudinal de capteur (Syz0) de manière symétrique par rapport à la quatrième ligne médiane de tube de mesure (114),
le plan longitudinal de capteur (Syz-0) s'étendant entre le premier tube de mesure (101) et le deuxième tube de mesure (102), le plan longitudinal de capteur (Syz-0) s'étendant entre le troisième tube de mesure (103) et le quatrième tube de mesure (104),
l'excitateur (140) étant conçu pour produire des vibrations d'oscillateur des deux oscillateurs (O1, 02) l'un par rapport à l'autre.

2. Capteur selon la revendication 1,
pour lequel le premier coupleur de vibrations (212) présente une première constante de raideur effective,
pour lequel le deuxième coupleur de vibrations (234) présente une deuxième constante de raideur effective, la deuxième constante de raideur ne s'écartant pas de la première constante de raideur de plus de 6 %, notamment pas de plus de 3 % et de préférence pas de plus de 1 %.

3. Capteur selon l'une des revendications précédentes,
pour lequel le capteur présente une première fréquence propre pour un mode de vibration dans lequel les deux tubes de mesure (101, 102) du premier oscillateur (O1) vibrent approximativement en phase l'un avec l'autre dans le premier mode de vibration de flexion, et dans lequel les deux tubes de mesure (103, 104) du deuxième oscillateur (02) vibrent approximativement en phase l'un avec l'autre dans le premier mode de vibration de flexion,
pour lequel le capteur présente une deuxième fréquence propre pour un mode de vibration dans lequel les deux tubes de mesure (101, 102) du premier oscillateur (O1) vibrent approximativement en opposition de phase, et dans lequel les deux tubes de mesure (103, 104) du deuxième oscillateur (02) vibrent approximativement en opposition de phase dans le premier mode de vibration de flexion,
pour lequel la deuxième fréquence propre est supérieure à la première fréquence propre.

4. Capteur selon la revendication 3,
pour lequel la deuxième fréquence propre est supérieure à la première fréquence propre d'au moins 4 %, notamment d'au moins 8 %, de préférence d'au moins 16 %.

5. Capteur selon l'une des revendications précédentes,
pour lequel le premier tube de mesure (101) et le troisième tube de mesure (103), sans les coupleurs élastiques de vibrations pour le premier mode de vibration de flexion, présentent une première fréquence propre effective de tube de mesure lorsqu'ils vibrent l'un par rapport à l'autre, le deuxième tube de mesure (102) et le quatrième tube de mesure (104) sans les coupleurs élastiques de vibrations pour le premier mode de vibration de flexion présentant une deuxième fréquence propre effective de tube de mesure lorsqu'ils vibrent l'un par rapport à l'autre, les deux fréquences propres moyennes de tube de mesure ne s'écartant pas de plus de 8 %, notamment pas de plus de 4 % et de préférence pas de plus de 2 % et de manière particulièrement préférée pas de plus de 1 %, de leur valeur moyenne arithmétique.

6. Capteur selon l'une des revendications précédentes,
pour lequel les plans longitudinaux de tube de mesure (Syz-1-4, Syz-3-2) sont inclinés de pas plus de 8°, notamment de pas plus de 4°, de préférence de pas plus de 2° et de manière particulièrement préférée de pas plus de 1° par rapport au plan longitudinal de capteur (Syz-0).

7. Capteur selon l'une des revendications précédentes,
pour lequel au moins l'un, de préférence les deux, des coupleurs élastiques de vibrations est relié aux tubes de mesure respectifs couplés par lui en des points de fixation qui sont disposés symétriquement par rapport au plan transversal de tube de mesure (Sxy).

8. Capteur selon l'une des revendications précédentes,
comprenant en outre :
un collecteur (120) côté entrée et côté sortie, les tubes de mesure étant regroupés en terme d'écoulement avec un collecteur côté entrée et côté sortie, les collecteurs étant notamment conçus de telle sorte qu'ils remplissent la fonctionnalité d'une plaque de renfort ; et
un corps de support (124), lequel relie de façon rigide le collecteur côté entrée et le collecteur côté sortie.

9. Capteur selon l'une des revendications précédentes,
comprenant en outre :
au moins une, de préférence deux ou plusieurs plaques de renfort du côté de l'entrée et du côté de la sortie, les tubes de mesure étant reliés entre eux côté entrée et côté sortie au moyen d'au moins une plaque de renfort, les plans longitudinaux des tubes de mesure étant symétriques les uns des autres par rapport au plan longitudinal du capteur.

10. Capteur selon l'une des revendications précédentes,
pour lequel les coupleurs élastiques de vibrations ne couplent que deux tubes de mesure à la fois.

11. Capteur selon l'une des revendications précédentes,
pour lequel il n'existe pas de liaison directe entre les deux coupleurs élastiques de vibrations.

12. Capteur selon l'une des revendications précédentes,
pour lequel la distance de position de repos des points de fixation d'un coupleur de vibrations sur les tubes de mesure couplés au moyen du coupleur de vibrations présente, à des températures comprises entre 20 °C et 80 °C, un coefficient de variation qui ne s'écarte pas de plus de 50 %, notamment pas de plus de 20 %, de préférence pas de plus de 10 %, du coefficient de dilatation thermique du matériau du coupleur de vibrations.
